# EUROPEAN PATENT APPLICATION

(11) **EP 1 185 097 A2**
(43) Date of publication of application: **06.03.2002**
(21) Application number: 01114330.2
(22) Date of filing: 13.06.2001
(51) Int. Cl.: H04N 5/765, H04N 5/775

(54) **Method and device for recording and reproducing television programs**

(30) Priority: 22.08.2000 JP 2000251060
(71) Applicant: SHARP KABUSHIKI KAISHA, Osaka 545-8522 (JP)
(72) Inventor: Haneda, Isamu, Souraku-gun, Kyoto (JP); Sakai, Yoichi, Hachioji-shi, Tokyo (JP)
(74) Representative: Müller . Hoffmann & Partner Patentanwälte

(57) **Abstract**

A television recording and reproducing system capable of obtaining information on television programs desired to record from an Internet, writing the information on a memory card loaded in a portable information terminal and realizing recording of the timer reserved programs by only inserting the memory card in a television program recording device.

A processing means of the information terminal writes the starting and ending times of each program and the channel in an index area on a memory card (8) inserted in the terminal (Step S1310) and, then, requests the user to confirm the correctness of settings (Step S1311). The user removes the memory card (8) from the information terminal (Step S1313) and inserts it into a television program recording device which in turn will be automatically powered ON at the start time and records the program.

## Description

### BACKGROUND OF THE INVENTION

The present invention relates to a television program recording system capable of operating according to television program reservation obtained from an internet or E-mal by using EPG (electric program guide) and stored on an IC card, recording visual data by using a television set and so on and reproducing the recorded program by using a portable information terminal.

Japanese Laid-Open Patent Publication No.2000-59717 discloses a prior art method that uses a television set/videotape recording device with an IC card inserted in an IC card slot thereof, which device receives television program information transmitted over a channel of a band unused by audio and visual signals of television broadcasts, displays the information on a display screen, reserves a program to be recorded and stores the reserved program information on the IC card to record the reserved program at and after the designated time of day.

### SUMMARY OF THE INVENTION

The prior art video device for reserving and recording television programs requires the user to load a cassette tape in the device and sets reserving the selected program information in the device.

On the other hand, an advanced digital data processing technology can now convert television broadcast data into digital data, compresses and record the data on a semiconductor memory and replays the data stored thereon.

Furthermore, memory cards have now been developed as semiconductor recording medium with a large storage capacity sufficient to record a long time television program.

In addition, television program table information is available through Internet.

The present invention is directed to the use of combination of Internet facilities, advanced digital technology and large-capacity memory cards in such a way that a desired television program information from the internet is received or directly input by a user into a portable information terminal and then transferred to a loaded therein memory card which is then removed and inserted into a video recording device, thereby the video recording device is automatically programmed to set a timer for recording the reserved television program for the specified time length of day. Thus, the present invention can maximally save the user's labor in setting the timer recording of television programs.

Accordingly, an object of the present invention is to provide a television program recording/reproducing method comprises using a portable information terminal with a memory card inserted in a card slot thereof, which has a means for writing program reservation information on the memory card, and using a video recording device which automatically recognizes the insertion of the memory card therein and, if the program reservation information is contained therein, sets the start time of the program to automatically record the program on the card memory.

Another object of the present invention is to provide a television program recording device having a two light emitting diodes one of which indicates "power supply is ON" (by stably lighting) i.e., "power source/recording" and "Recording is being conducted" (by flashing) and the other indicates "the timer is set" (by stably lighting) and "the occurrence of an error" (by flashing) i.e., "timer setting/error".

Another object of the present invention is to provide a portable information terminal having a means for writing an actual time of a clock of the terminal on a memory card inserted therein and a television program recording device having a means for setting the actual time information of the memory card as the actual time of the recording device.

Another object of the present invention is to provide a television program recording device that has a means for detecting the coincidence of the actual time with the time preset on the timer (with a timer interruption signal), a means for starting recording of the television program on a memory card by the timer interruption signal, and a means for indicating the end of recording the program by turning on a light emitting diode "timer setting/error".

Another object of the present invention is to provide a television program recording device which has a means for stopping the recording of the television program if the writing data on a memory card is unable, turning on a light emitting diode "timer setting/error" and at the same time displays on a screen a reason for the incapability of recording the program.

A further object of the present invention is to provide a television program recording device having a means for detecting the presence or absence of an input visual signal at the beginning of recording the program or during the recording operation thereafter.

A still further object of the present invention is to provide a television program recording device which has a means for displaying a character string indicating a reason for interrupting the recording operation.

Another object of the present invention is to provide a television program recording device which has a means for detecting the removal of a memory card during the timer recording setup procedure and recording the television program.

Another object of the present invention is to provide a portable information terminal which has a means for reproducing a television program recorded on a memory card inserted therein.

Namely, the terminal has the means for recognizing a format of the video program recorded by a television program recording device and reproducing the video program in real time.

### BRIEF DESCRIPTION OF THE DRAWINGS

Figure 1 is a block diagram illustrating a system construction of a portable information terminal which is used for recording and reproducing a television program according to a television recording and reproducing method of the present invention.

Figure 2 illustrates an external appearance of a television program recording device according to the present invention.

Figure 3 is a block diagram of a television program recording device according to the present invention.

Figure 4 is a flowchart depicting a procedure for loading a memory card in a television program recording device according to the present invention.

Figure 5 is a flowchart depicting a procedure to be effected when a television program could not be recorded with an error having occurred during the recording operation of an embodiment of the present invention.

Figure 6 is a flowchart depicting a procedure for recording a television program when the time preset on a timer is counted up by an embodiment of the present invention.

Figure 7 illustrates an exemplary list of programs on the WEB.

Figure 8 illustrates an exemplary mail describing program contents, which is available from the WEB.

Figure 9 illustrates a memory map structure of a memory card.

Figure 10 illustrates an exemplary text data of a program content to be stored in an index area of a memory card.

Figure 11 illustrates an exemplary menu of programs selectable for reproduction, which is displayed on a display screen of a portable information terminal.

Figure 12 illustrates another exemplary menu of programs selectable for reproduction, which is displayed on a display screen of a portable information terminal.

Figure 13 is a flowchart depicting a procedure for timer settings for recording a television program and storing the setting data on a memory card.

Figure 14 illustrates a flowchart depicting a procedure for timer settings for recording a television program and storing the setting data on a memory card.

### PREFERRED EMBODIMENT OF THE INVENTION

A television program recording and reproducing method according to a preferred embodiment of the present invention will be described bellow with reference to the accompanying drawings.

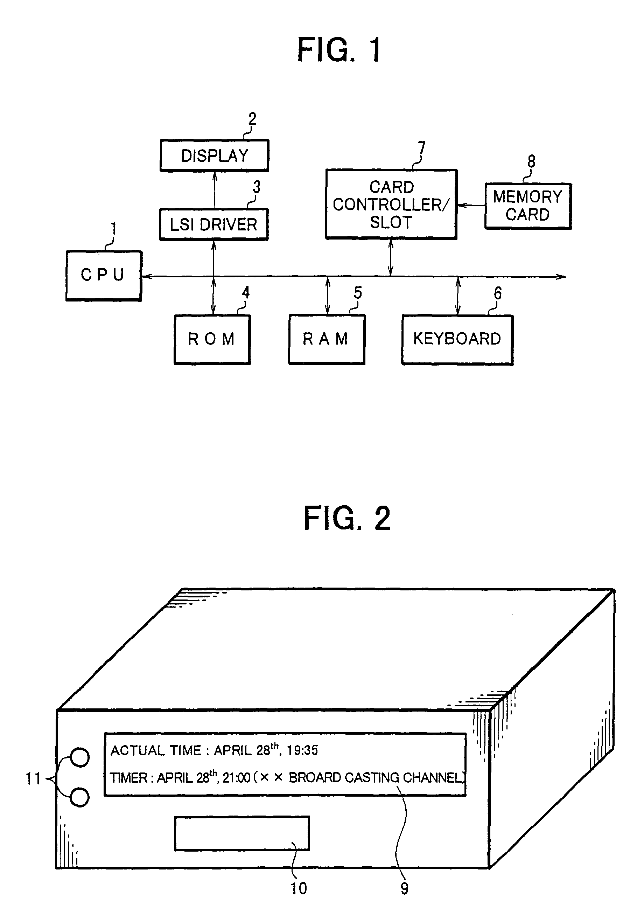

Figure 1 is a block diagram of a system construction of a portable information terminal (e.g., PDA, electronic notebook, electronic dictionary) for implementing a television program recording and reproducing method of the present invention.

In Fig. 1, numeral 1 designates a central processing unit (CPU) 1 having a clock function and numeral 2 designates a display that is typically a color display for reproducing color images of a television program. Numeral 3 is an LSI driver for driving the display 2, 4 is a mask ROM or a flash memory storing thereon a program for controlling the operation and activities of the portable information terminal, 5 is a readable/writable RAM that may be a work area and a stack necessary for reproducing a recorded television program. Numeral 6 designates a keyboard for entering information into the terminal by depressing a key or a combination of keys, where depressed keys can be scanned and identified by the CPU 1. Numeral 7 is a memory card controller/slot through which the CPU 1 can detect the presence or absence of a memory card 8 in a slot and can read and write data on the memory card 8.

The CPU 1 possesses the capability of reading a television program recorded on the memory card 8 and reproducing the program in real time.

The portable information terminal can erase information, e.g., a past recorded television program on the memory card 8.

Fig. 2 is an external view of a television program recording device according to the present invention.

In Fig. 2, numeral 9 designates a display portion which may be, for example, a black-and-white liquid crystal display on which the actual time, the recording start time set on a timer and information on a reserved broadcast program may be presented. In the event of an error in recording a television program, a reason for the error can be indicated on the display portion 9.

Numeral 10 is a card slot of the portable information terminal, which is used for loading a memory card 8.

Numeral 11 is given to two light emitting diodes, one of which is an indicator LED "power source/recording" that may light when the power source of the television program recording device is turned on and may flash while the recording device records the television program and the other is an indicator LED "timer setting/error" that may light when the timer setting is completed and may flash when the recording device failed in recording the television program.

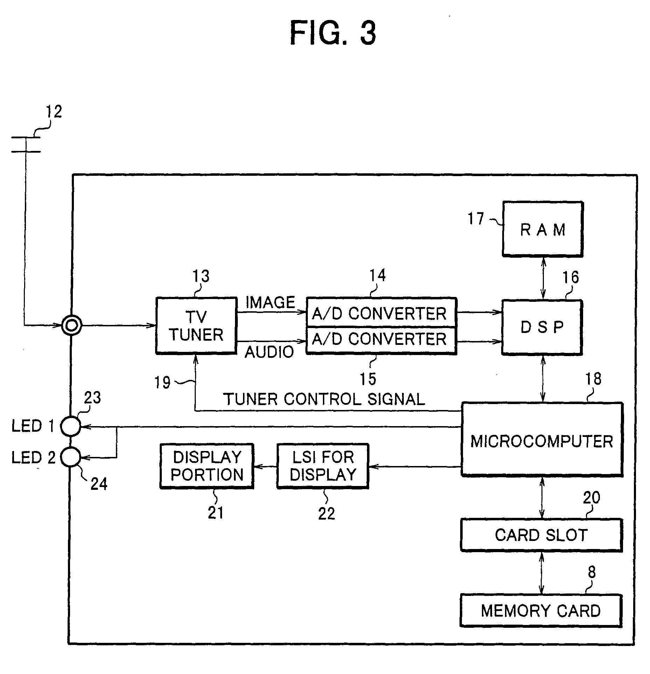

Fig. 3 is a block diagram illustrating the construction of a television program recording device according to the present invention.

In Fig. 3, numeral 12 designates an antenna and numeral 13 designates a television tuner.

Numeral 14 is an A-D converter for converting an analog image signal output from the television tuner 13 into a digital signal and numeral 15 is an A-D converter for converting an analog audio signal output from the television tuner 13 into a digital signal.

Numeral 16 is a digital signal processor DSP (made on a LSI), which can compress input audio-visual data in real time and can write the data on the RAM 17.

Numeral 18 designates a microcomputer capable of controlling the operation of the television program recording device, which has an operation program stored on its inner ROM and incorporates a work memory necessary for temporally storing information by the operation program.

The microcomputer also has a clock and a timer, which may generate an interrupting signal to the microcomputer 18 when the clock time and the timer setting coincide with each other.

While recording the television program, the microcomputer 18 may transfer onto the memory card 8 (common to the memory card of Fig. 1) video data and audio data compressed and recorded on the RAM 17, adding information necessary for reproducing the video and audio data at the same time.

The microcomputer includes can drive two light-emitting diodes 23 and 24.

Numeral 19 is a tuner control signal output from the microcomputer 18 to control the power supply to the television tuner 13 and the operation of selecting a television broadcast channel.

Numeral 20 designates a card slot through which the microcomputer 18 reads information such as the actual time and program reservation information from the memory card 8 and writes data of the television program desired to record. When the memory card 8 was removed from or inserted into the card slot, an interruption signal is sent from the slot portion to the microcomputer 18 that can thereby detect in real time the removal or insertion of the memory card 8.

Numeral 21 is a display portion that may be a black-and-white liquid crystal display on which the actual time, the time preset on the timer and a television program title are indicated.

Numeral 22 is an LSI circuit for driving the display portion 21.

Numeral 23 is an indicator LED "power source/recording" that indicates "power on" of the television program recording device by lighting and "television program is being recorded" by flashing.

Numeral 24 is an indicator LED "timer setting/error" that indicates a state "timer is set" by lighting and a state of "recording device failed in recording the television program" by flashing.

The two LEDs 23 and 24 are controlled and driven from the microcomputer 18.

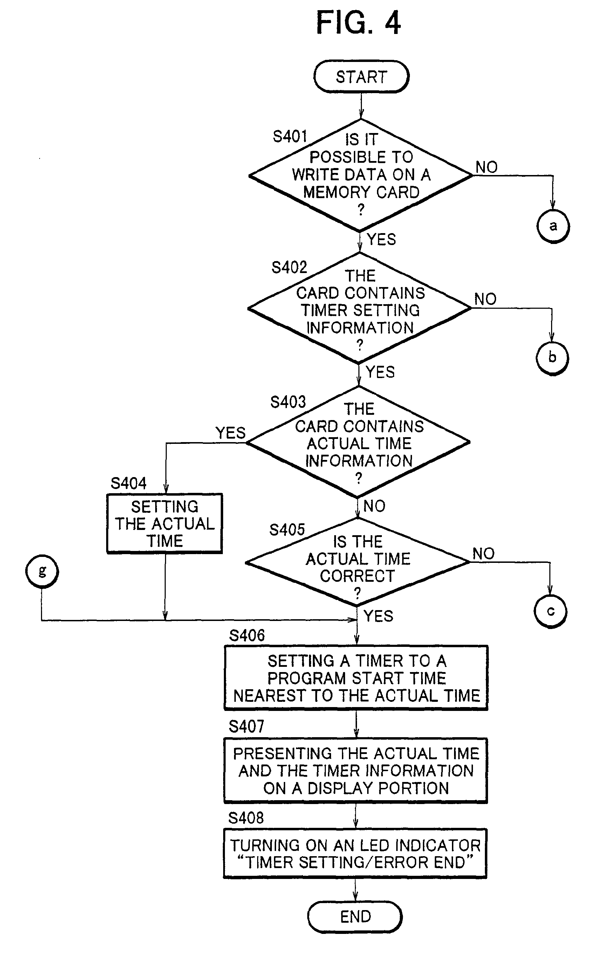

Fig. 4 is a flowchart depicting a procedure with a memory card 8 loaded in a television program recording device according to the present invention.

Referring to Fig.4, the procedure with a memory card 8 inserted into the recording device is now described below.

The device first examines whether a television program can be written on the memory card 8 (Step S401).

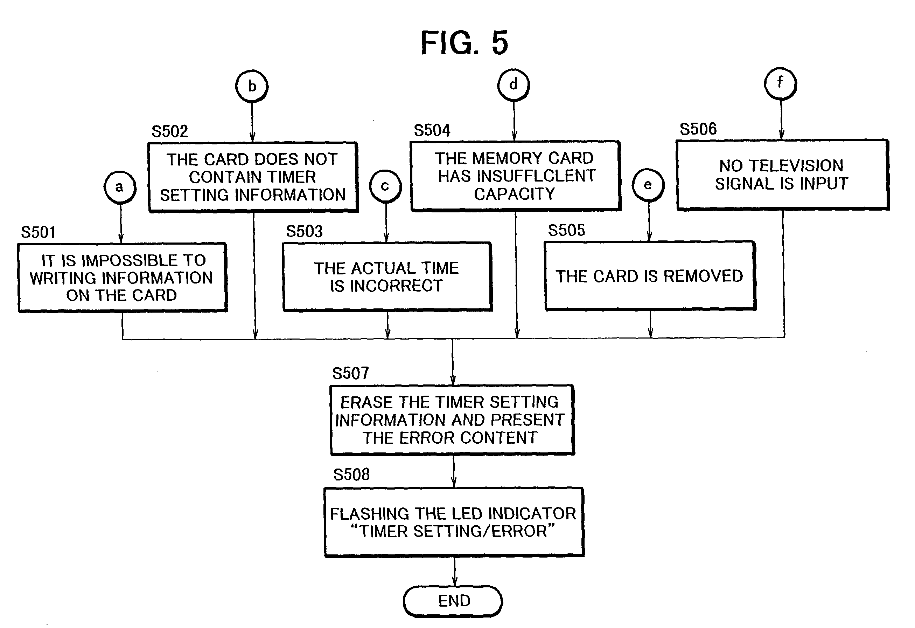

If the memory card 8 is protected against writing, the device proceeds to the processing entry (a) (in a flowchart of Fig. 5) since the television program cannot be recorded in that case.

When the memory card 8 is ready to record the television program, the device examines whether the memory card 8 contains television program reservation information (Step S402). If no information or incorrect information is contained, the device proceeds to the processing entry (b) for indicating the state (in the flowchart of Fig. 5).

When timer information is contained on the memory card 8, the device further examines whether the actual time information is contained therein (Step S403). If no information on the actual time is found, the device proceeds to Step S405.

When the memory card 8 contains the actual time information, the actual time is set as the actual time of the television program recording device (Step S404) and the procedure proceeds to Step S406.

In Step S405, the actual time originally set on the television program recording device is examined whether it is correct and accurate. If it is provably impossible date and time, the procedure proceeds to the processing entry (c) (in the flowchart of Fig. 5). With the correct time data, the procedure proceeds to Step S406.

In Step S406, one of starting times of the television program reservation information, which is nearest to the actual time, is selected and set a timer inside the microcomputer 18 of the television program recording device for the time.

The information such as the actual time, the time preset on the timer and broadcast station name is displayed on the display portion (Step S407).

Then, the microcomputer 18 causes the LED "timer setting/error" 25 to light for indicating the presence of the timer settings (Step S408).

Fig. 5 is a flowchart depicting a procedure to be effected when a television program could not recorded due to an error having occurred during the recording operation.

In Fig. 5, an entry (a) from the flowchart of Fig. 4 is used when the memory card 8 did not allow the writing of data thereon. The procedure proceeds to Step S501.

The actual time remains as indicated on the display portion whilst the timer setting information erased and the content of Step S501 is displayed on the erased area of the display portion (Step S507), then the indicator LED "timer setting error" 25 starts flashing to inform the user of the occurrence of an error (Step S508).

An entry (b) from Fig.4 is used when no timer setting information was found on the memory card 8. The procedure proceeds to Step S502.

The processing similar to the case of the entry (a) is further conducted to indicate the content of Step S502 on the display portion (Step S507). The procedure then proceeds to Step S508.

An entry (c) from Fig.4 is used when the actual time is incorrect. The procedure proceeds to Step S503.

The processing similar to the case of the entry (a) is then conducted to indicate the content of Step S503 on the display portion (Step S507). The procedure further proceeds to Step S508.

An entry (d) is used when the memory card 8 became full with records in course of recording a television program. The procedure proceeds to Step S504.

The processing similar to the case of the entry (a) is then conducted to indicate the content of Step S504 on the display portion (Step S507). The procedure then proceeds to Step S508.

An entry (e) is used when the memory card 8 was removed while recording a television program thereon. The procedure proceeds to Step S505.

The processing similar to the case of the entry (a) is then conducted to indicate the content of Step S505 on the display portion (Step S507). The procedure then proceeds to Step S508.

An entry (f) is used when no television signal was input while recording a television program. The procedure proceeds to Step S506.

For example, this may be such a case that the timer setting was wrong and could not catch the TV broadcast.

The processing similar to the case of the entry (a) is then conducted to indicate the content of Step S506 on the display portion (Step S507). The procedure then proceeds to Step S508.

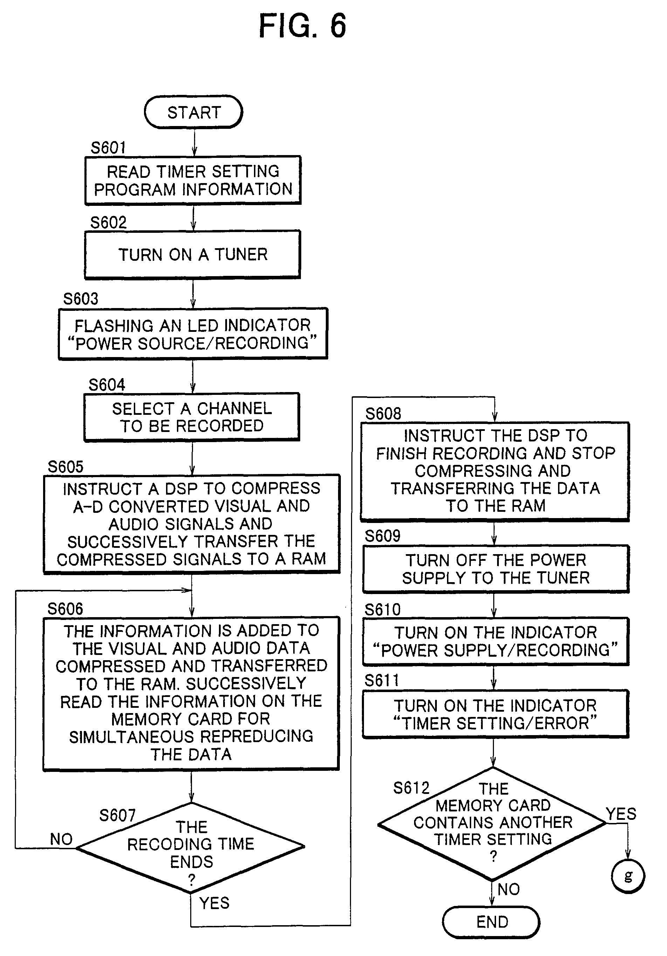

Fig. 6 is a flowchart depicting the procedure for recording a television program under the control of a microcomputer of a television program recording device when the actual time coincides with the time set on a timer of the recording device.

When the actual time coincides with the time set on the timer, the microcomputer reads the television program reservation information at the time set on the timer (Step S601).

Television tuner 13 is supplied with power (Step S602).

The indicator LED "power source/recording" 24 starts flashing to indicate the television program is being recorded (Step S603). A channel for recording the television program is selected for the television tuner 13 (Step S604).

Analog audiovisual signals output from the television tuner 13 are converted through the A-D converter 14 to digital audiovisual signals. The digital signal processor (DSP) 16 is now instructed to successively compress in real time and transfer the digital audiovisual signals to the RAM 17 (Step S605).

The DSP 16 compresses the digital audiovisual data output from the A-D converters 14 and 15 and starts transferring the compressed digital data to the RAM 17.

When no input television data was detected, the DSP 16 informs the microcomputer 18 of that event.

The microcomputer 18 stops the processing by the DSP 16 and turns off the power supply to the television tuner 13 and then proceeds the procedure to the entry (f) (Step S506).

The microcomputer 18 successively reads the data, which was compressed and written to the RAM by the DSP16, adds thereto information for simultaneously reproducing visual data and audio data in pairs and writes the data on the memory card 8 (Step S606).

When the memory card 8 became full with records or it was removed from the recording device during this process, the microcomputer 18 stops the processing by the DSP 16, turns off the power supply to the television tuner 13 and then proceeds the procedure to the entry (d) in Fig.5 (Step S504) or the entry (e) in Fig. 5 (Step S505).

The microcomputer 18 examines whether the actual time coincides with the time to finish the recording of the television program (Step S607). If it does not reach the ending time, the procedure returns to Step S606 to continue the recording of the television program. When it reached the ending time, the microcomputer 18 causes the DSP 16 to stop the processing (Step S609).

On completion of the recording operation, the microcomputer 18 turns off the power supply to the television tuner 13 (Step S609).

A state of flashing in the "power source/recording LED" 24 is turned into a state of stably lighting to indicate the recording is not conducted (Step S610).

A state of flashing in the "timer setting/error " LED 25 is also turned into a state of stably lighting to indicate the recording was finished (Step S611).

The microcomputer 18 examines whether information on a next television reservation program is contained on the memory card 8 (Step S612). In the presence of the next television program reservation information, the microcomputer proceeds to the entry (g) in Fig. 4 (Step S406) where the recording of the television program is set on the timer. In the absence of the information, the microcomputer finishes the procedure.

The practical method for recording a television program with the timer is described below.

For example, a guide for TV programs for 8 days is available from the ON TV JAPAN provided by ASCII Co. Ltd. through the WEB. Furthermore, one can obtain a list of programs of a preferable genre by E-mail when he or she is registered as a membership of the ON TV JAPAN through the WEB.

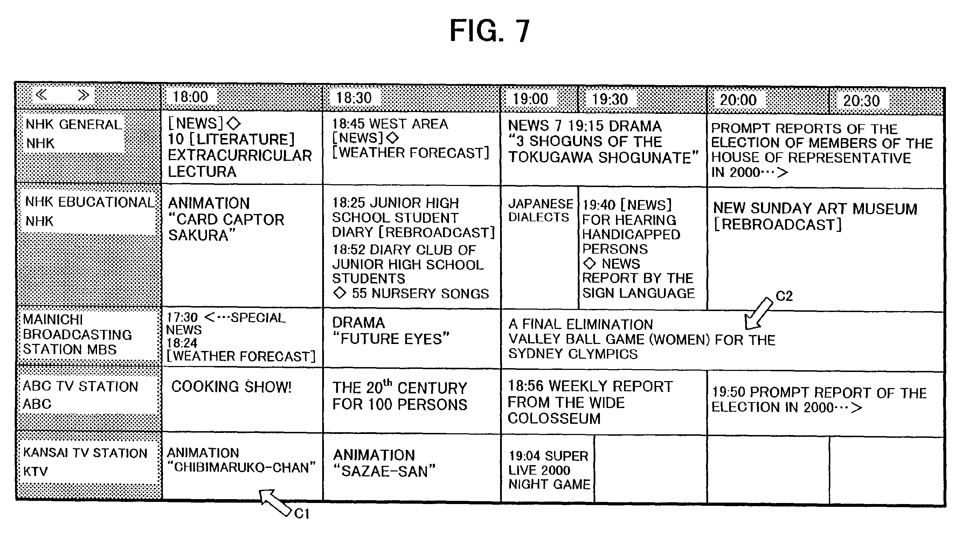

Fig. 7 illustrates an image of an exemplary television program guide on the WEB.

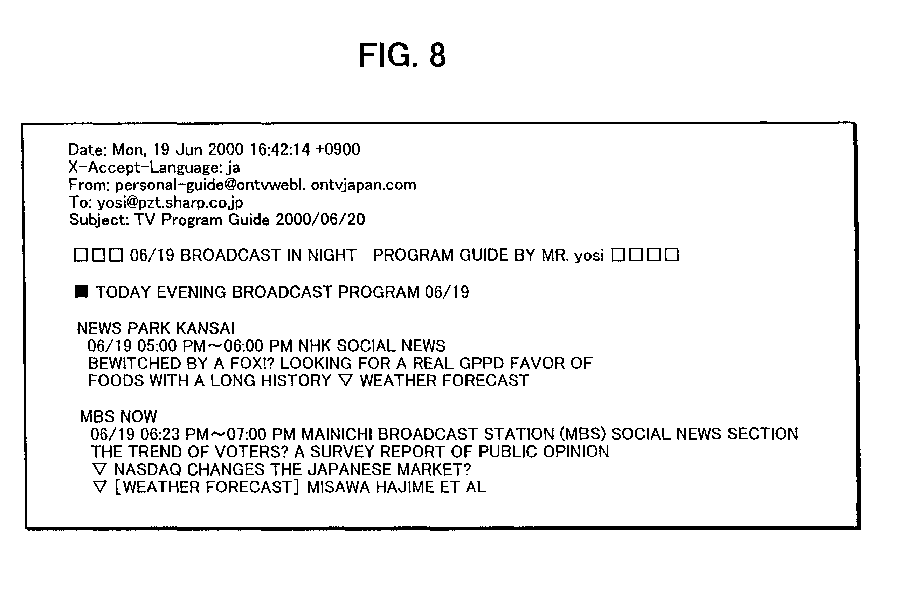

Fig. 8 illustrates an exemplary mail describing contents of television programs, which is available from the WEB.

The present invention uses a television program guide on the WEB in such a manner that the user selects a desired program on a menu by using a pointing device (C1 in Fig. 7 indicates the first time selection and C2 the second time selection). The program information output on the WEB includes the stating time, ending time, channel number and program title, which are then recorded in an area, of the memory card 8, (this area is used as an index area).

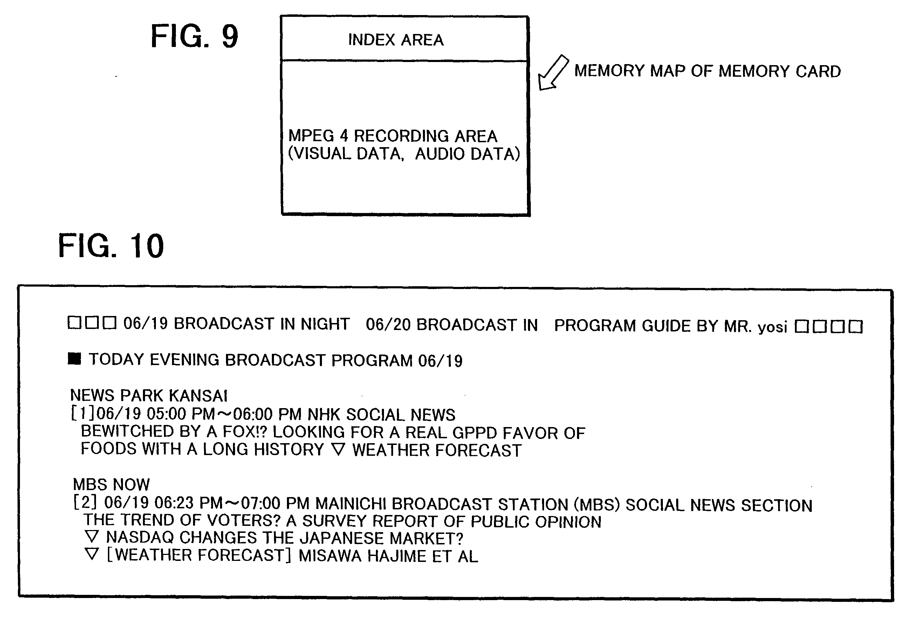

Fig. 9 illustrates a memory map structure of a memory card.

In this case, the memory card 8 is first examined whether it has an area whose capacity is sufficient to store a desired television program. If the area is insufficient, a message informing of the fact is presented in a dialog box on a display screen, requesting the user to erase any other information stored on the memory card or querying the user to decide recording the program not to its end but to the limit of the available vacant area of the memory card.

In the contrary, when the memory card has a sufficient capacity to record a plurality of television programs, the information on programs are numbered according to priority (the selection order) and stored in the index area of the memory card 8.

The CPU 1 of the portable information terminal recognizes that the capacity of the memory card 8 can afford to the total recording time-length of the selected programs and then informs the user of completion of reservation of the memory for recording the programs with the timer.

If the recording times of two programs are specified with an overlap there between, the CPU 1 informs the user through the dialog box that the program of the next priority cannot be recorded and requests the user to confirm the decision of canceling the timer settings of the next priority program.

On completion of the timer recording setup procedures for desired television programs, the user takes the memory card 8 out of the portable information terminal and then inserts it into a card slot 20 of the television program recording device.

In turn, the television program recording device recognizes the insertion of the memory card 8, reads the index data stored on the memory card 8 and will automatically powered on at the program recording start time according to the internal clock which measures time based on the RTC circuit of the recording device.

Alternatively, E-mailed information shown in Fig. 8 may be numbered according to priority, for example, by adding codes (e.g. [1], [2] and so on) before titles of respective programs and then be transferred as text data to the memory card 8 for timer settings for recording the programs.

Fig. 10 shows an exemplary text data of program contents, which is stored in an index area of the memory card 8.

Furthermore, the timer settings for recording television programs may be realized by using EPG (electronic Program Guide) function of a personal computer if the PC possesses the above function.

The recording medium may be a SD card, MM card (Multi Media Card) and the like other than the memory card adopted for the embodiment of the present invention. The recording method is not limited to MPEG4 and may use other compression technique.

Referring now to Fig. 3, the operation of the television program recording device with the memory card 8 containing information on the programs to be recorded thereon will be described below.

The microcomputer 18 of the television program recording device detects the insertion of the memory card 8 therein, reads the television program reservation information from the index area of the memory card 8 and stores the information in a work area of the RAM 17 in the television program recording device.

The actual time is monitored by using the RTC in the television program recording device. When the actual time coincides with the time to start recoding the television program, the recording device sets the television tuner 13 to the selected channel and starts recording the selected television program.

The television program is digitized and recorded by using a compressing and expanding method so called MPEG4.

Namely, for recording the program, signals output from the television tuner 13 are digitized, compressed and stored in a program recording area (MPEG4 storing area in Fig. 9) of the memory card 8.

On completion of recording the television program, the television program recording device automatically turns off the power supply and finishes the recording operation.

Referring to Fig.1, the procedure for replaying the program recorded on the memory card 8 loaded in the portable information terminal.

The user inserts the memory card 8 with the television program recorded thereon into a card slot of the portable information terminal.

The CPU 1 of the portable information terminal reads information including a title of the recorded television program from the index area of the memory card 8 and indicates the information on the display 2.

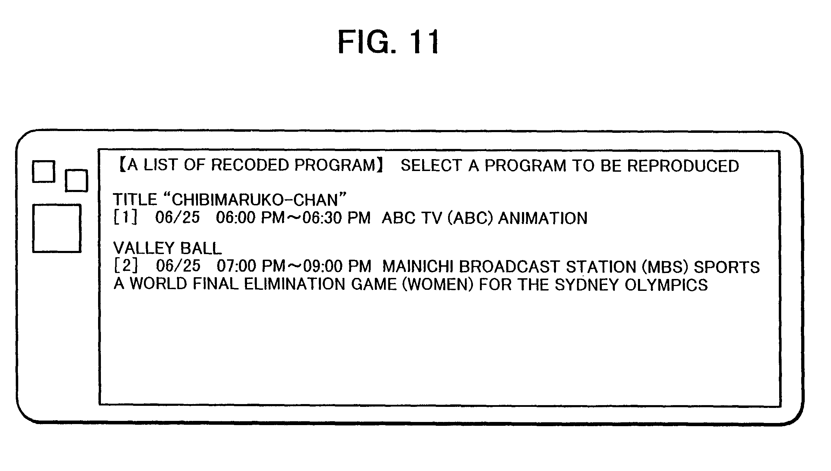

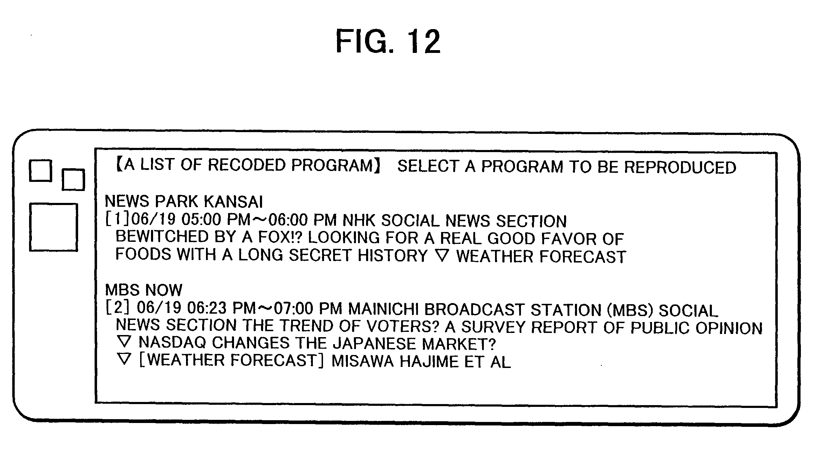

Figs. 11 and 12 show exemplary lists indicated on a display screen for selecting television programs to be reproduced.

With a plurality of programs recorded on the memory card, titles of the programs are indicated with numbers (e.g. [1], [2], and so on) put before the respective titles as shown in Figs. 11 and 12.

The user selects a desirable one of the programs with a pointing device, thereby the program information is automatically read from the memory card 8.

Since the program is stored in the format of MEPG4 on the memory card in the present embodiment of the invention, the content of the program is decoded, reproduced and then displayed on the display 2.

Any one of television programs recorded on the memory card 8 can be erased by specifying the numbered title of the program to erase and then by selecting an erasing command. By doing so, the selected program and the relevant index data are erased together from the memory card 8.

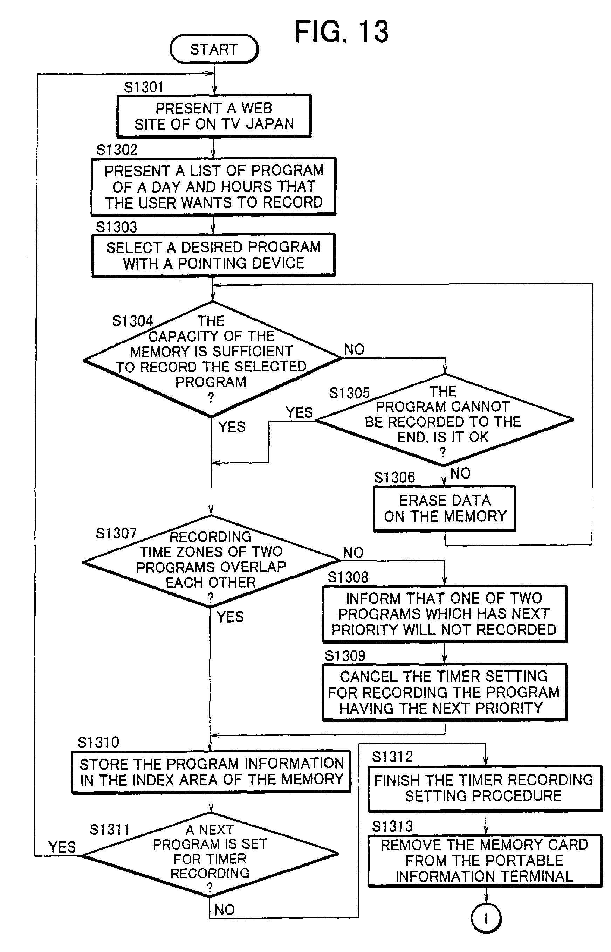

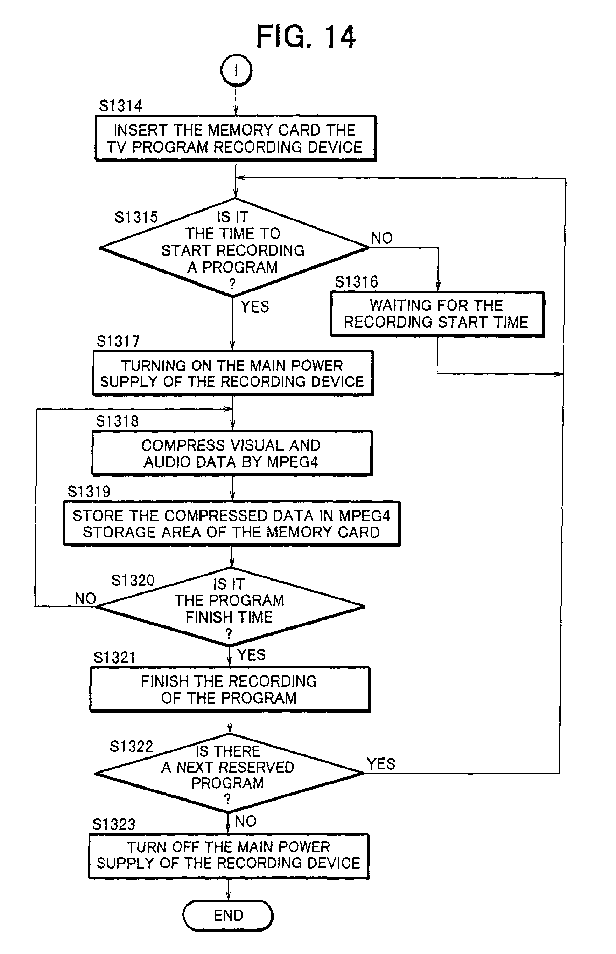

Figs. 13 and 14 are flowcharts depicting detailed procedure for recording television reserved programs and storing data on the memory card.

Referring to the flowcharts of Figs. 13 and 14, the procedure for recording television reserved programs and storing data on the memory card will be described below in detail.

In this case, the portable information terminal is already loaded with the memory card 8.

First, the portable information terminal is connected to the Internet and has an access to the site of ON TV WEB (Step S1301).

A program guide of Fig. 7 appears on the display screen (Step S1302).

As shown in Fig. 7, programs desired to record are selected (C1 and C2) with the pointing device (Step S1303).

The vacant capacity of the MEPG4 storage area of the memory card 8 is examined whether it is enough to record the selected program(s) (Step S1304).

When the capacity of the memory card 8 is insufficient to record the program(s), the procedure proceed to Step S1305 to query whether the user allows the incomplete recording of the selected program(s). If the user does not allow the incomplete recording of the program(s), the user must erase other data on the memory to create the sufficient vacant storage area (Step S1306). The procedure then returns to Step S1304.

If the user allows the incomplete recording, the procedure proceeds to Step S1307 wherein the recording periods of two programs are examined whether they overlap each other.

If the two recording periods overlap each other, the procedure proceeds to Step S1308 wherein the user is informed of the decision that the next priority program will not be recorded. After cancellation of the next priority program (Step S1309), the procedure proceeds to Step S1310.

In Step S1310, the processing means of the portable information terminal writes the program starting time, the ending time and the channel in the index area of the memory card 8 loaded in the information terminal.

The user is then requested to confirm that the user need to reserve recording the next program (Step S1311). If the user wanted to reserve recording the next program, the procedure returns to Step S1301.

If the user does not wanted to reserve recording the next program, the procedure for reserving television programs ends in Step S1312.

The user removes the memory card 8 from the portable information terminal (Step S1313).

The procedure proceeds to Step S1314 (in Fig. 14) wherein the memory card 8 is inserted into the television program recording device.

The processing means of the television program recording device measures the actual time and monitor whether it is the time to start recording the program (Step S1315).

When it is still before the recording start time, the procedure goes to S1316 wherein the television program recording device remains in the waiting state until the actual time reaches the time to start recording the program.

At the recording start time, the main power supply of the recording device is automatically turned ON (Step S1317).

In Step S1318, the audiovisual information of the television program is compressed by the system of MPEG4 and stored in the MPEG4 storage area of the memory card 8 as shown in Fig. 9.

The processing means of the television program recording device monitors the program ending time (Step S1320). The processing means returns to Step S1318 and continues compressing and storing the data until the actual time reaches the program ending time. At the program ending time, the processing means finishes the recording operation (Step S1321).

In Step S1322, the processing means examines whether there remains a next program to be recorded. If there is the next program to be recorded, the processing means returns to Step S1315 wherein the processing means conducts monitors whether the actual time reaches to the time of staring recording the next program.

If no program remains, the main power supply of the television program recording device is automatically turned OFF (Step S1323) and the recording procedure is finished.

The timer recording setup procedure for television programs with a portable information terminal and the procedure for recording the reserved programs with a television program recording device are conducted according to the above flowcharts.

According to the present invention, it is possible to easily set obtain desired television program information from the Internet to a portable information terminal or directly input the desired program information into the information terminal and transfer the selected television program information to a memory card. This memory card is then inserted into a television program recording device which in turn is automatically programmed to record a selected program according to the timer recording settings. When the timer counts up the preset time, the television program recording device automatically starts recording the television program on the memory card. The television program recorded on the memory card is then reproduced by loading it into the portable information terminal. This system enables the user to easily conduct timer settings and recording reserved television programs on the memory card.

## Claims

1. A television program recording method comprising:
using a portable information terminal for obtaining television program reservation information from an Internet, an electronic mail or directly entered by a user, recording the television program reservation information on a memory card (8) inserted in the portable information terminal; and
using a television program recording device having a card slot (20) for loading the memory card (8) with information recorded by the portable information terminal, **characterized in that** the device automatically recognizes the insertion of the memory card (8), analyzes the information written on the memory card (8), and, if the information contains the television program reservation information, sets a timer to one of starting times of the television program reservation information, which is nearest to the actual time, to record the timer set program.

2. A television program recording method as defined in claim 1, **characterized in that** the actual time of the portable information terminal is also written on the memory card (8), and, when the actual time information written on the memory card (8) is detected by the television program recording device, the actual time of the recording device is automatically updated according to the actual time of the memory card with priority.

3. A television program reproducing method capable of reproducing a television program recorded on the memory card (8) inserted in a slot of a portable information terminal by using the television program recording method defined in claim 1 or 2.

4. A portable information terminal used for implementing the television program recording method defined in claim 1 or 2 and for implementing the television program reproducing method defined in claim 3, comprising a means for writing television reservation program information on a memory card (8), said information obtained from an Internet or an electronic mail or directly entered by a user, and a means for reproducing a television program, which has been recorded on the memory card (8) by a television program recording device.

5. A television program recording device comprising a card slot (20) for inserting a memory card (8) with television program reservation information written thereon by a portable information terminal, a means for automatically recognizing the insertion of the memory card (8) into the card slot (20) and analyzing the information written on the memory card (8), a means for setting a timer to one of start times of the television program reservation information, said time being closest to the actual time based on the analysis of the information written on the memory card (8), and a means for recording the timer set television program on the inserted memory card (8) at the time set on the timer, which device is used for implementing the television program recording method defined in claim 1 or 2.

6. A television program recording device as defined in claim 5, **characterized in that** an LED indicator (24) for timer setting/error indicating is provided and lights when the timer is set to the start time of the television program reservation information and indicates that the timer setting is completed.

7. A television program recording device as defined in claim 5 or 6, **characterized in that** a display portion (21) is provided for automatically displaying the actual time and timer setting information containing date, hour and minute information, and program title information on completion of the timer setting.

8. A television program recording device as defined in claim 7, **characterized in that** said device further comprises an LED indicator (23) for power source/recording indicating and, when the actual time coincides with the time set on the timer, starts recording a reserved television program on the memory card (8) at the time, causes at the same time the LED indicator (23) to flash for indicating the program being recorded, and, when recording the reserved television program ends, turns the LED indicator (23) to constantly light for indicating the power supply being ON, clears off the timer setting information on the display portion (21), informs the completion of recording the program, examines whether another program reservation information, and, if the information is found, sets the timer to the program start time and causes the LED indicator (24) for timer setting/error indicating to light for indicating the completion of the timer setting.

9. A television program recording device as defined in any one of claims 6 to 8, **characterized in that** in the event of prohibiting recording on the memory card (8) or in the event of shortage in capacity of the memory card (8) while recording the program thereon, the device stops the recording and causes the LED indicator (24) for timer setting/error indicating to flash for indicating the occurrence of an error.

10. A television program recording device as defined in any one of claims 6 to 8, **characterized in that** in the event of absence of an input image at the beginning or in the course of recording the reserved program, the device stops the recording and causes the LED indicator (24) for timer setting/error indicating to flash for indicating the occurrence of an error.

11. A television program recording device as defined in claim 9 or 10, **characterized in that** an error content is displayed on the display portion (21) simultaneously with the error indication by the LED indicator (24).

12. A television program recording device as defined in any one of claims 5 to 11, **characterized in that** in the event of removal of the memory card (8) from the card slot (20) during the recording operation, the device detects the removal of the memory card (8) and cancels the timer setting.
